# EUROPEAN PATENT SPECIFICATION

(11) **EP 0 545 681 B1**
(45) Date of publication and mention of the grant of the patent: **06.09.1995**
(21) Application number: 92310990.4
(22) Date of filing: 02.12.1992
(51) Int. Cl.: B60C 13/00, B60C 17/00

(54) **Pneumatic safety tyre**
Sicherheitsluftreifen
Bandage pneumatique de sécurité

(30) Priority: 05.12.1991 JP 349242/91
(43) Date of publication of application: 09.06.1993
(73) Proprietor: SUMITOMO RUBBER INDUSTRIES LIMITED, Kobe-shi Hyogo-ken (JP)
(72) Inventor: Hasegawa, Hirotsugu, Kakogawa-shi,Hyogo-ken (JP)
(74) Representative: Stewart, Charles Geoffrey

(56) References cited:
- EP-A- 0 359 734
- EP-A- 0 371 755
- GB-A- 2 053 815
- US-A- 4 365 659

## Description

The present invention relates to a pneumatic tyre, more particularly a run flat tyre of which run flat performance is improved without sacrificing high speed durability and steering stability so as to run safely for a long distance.

In order to provide run-flat performance for a tyre, various structures, for example, a solid elastic member, an inflatable structure to form an independent air chamber and the like, have been proposed as a load support member disposed in the tyre main body.

Such structures are however, not usable especially in a high performance tyre because the tyre and wheel assembly weight is greatly increased and thereby high speed running performance is greatly deteriorated.

Therefore, in US-A-5,058,646, which corresponds to the preamble of claim 1, another proposition was made, wherein in order to prevent the tyre from being dislocated from the rim under deflated conditions, the tyre is provided with a radially inwardly protruding bead toe, and the rim is provided with a groove engaging with the bead toe.

Owing to the provision of the bead toe, the thickness of the bead portion increases, and the bead rigidity is increased.

On the other hand, to increase the sidewall rigidity and to thereby to improve the load bearing ability of the sidewall portion under deflated condition, a crescent-shaped three-layered rubber structure of which the radially inner edge is terminated in the sidewall portion above the rim flange top, is disposed axially inside the carcass, and the sidewall thickness decreases from the maximum tyre section width point towards the tyre shoulder.

Such a tyre is effective in providing run flat performance.

In this system, however, mounting and demounting work is hard, and a rim specifically designed for the tyre must be used. Therefore, tyre users are restricted in their freedom of rim selection, which is commercially not preferable. It is preferable that a tyre can be mounted on a normal rim rather than on such a special rim.

An object of the present invention is therefore, to provide a pneumatic safety tyre suitable for high speed sport use which is improved in run flat performance without sacrificing high speed running performance.

Another object of the present invention is to provide a pneumatic safety tyre devoid of a special bead toe, which can be mounted on a normal rim.

According to one aspect of the present invention, a pneumatic tyre comprises a tread portion, a pair of axially spaced bead portions, a pair of sidewalls extending between tread edges and the bead portions, a pair of bead cores disposed one in each bead portion, a carcass extending between the bead portions through the tread portion and sidewalls, and a belt disposed radially outside the carcass and extending across the tread width, characterised in that each sidewall is provided axially inside the carcass with an inside sidewall rubber layer (10), the inside sidewall rubber layer extending radially inwardly to the bead portion and radially outwardly into the tread portion along the convexly curved inner surface of the carcass, the total thickness of the tyre measured from the outer surface to the inner surface of the tyre being such that the total thickness (TA) is substantially constant in a region (S), defined as the region extending between a maximum width point (A) at which the width of the tyre is a maximum in the unloaded state, and a 65% height point (B) located at a 65% height (HB) of the tyre section height (H), each measured from the bead base line (b) in the unloaded state, the unloaded state being such that the tyre is mounted on its regular rim and inflated to its regular inner pressure but loaded with no tyre load, and that the total thickness (TC) measured at a contacting point C is larger than the total thickness (TA) in the region (S), the contacting point (C) being defined as the point at which the outer surface of the tyre starts to contact the radially outer edge of the flange of the regular rim in the unloaded state.

An embodiment of the present invention will now be described in detail in conjunction with the accompanying drawings, in which:
Fig.1 is a cross sectional view of a tyre according to the present invention;
Fig.2 is a schematic cross sectional view of the tyre showing thicknesses at the specific points;

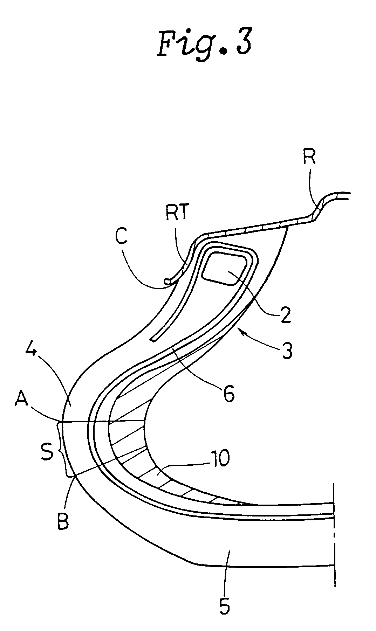

Fig.3 is a schematic cross sectional view of the tyre showing the deflated state thereof;
Fig.4 is a graph showing the relationship between the run flat performance and the temperature of the road surface.

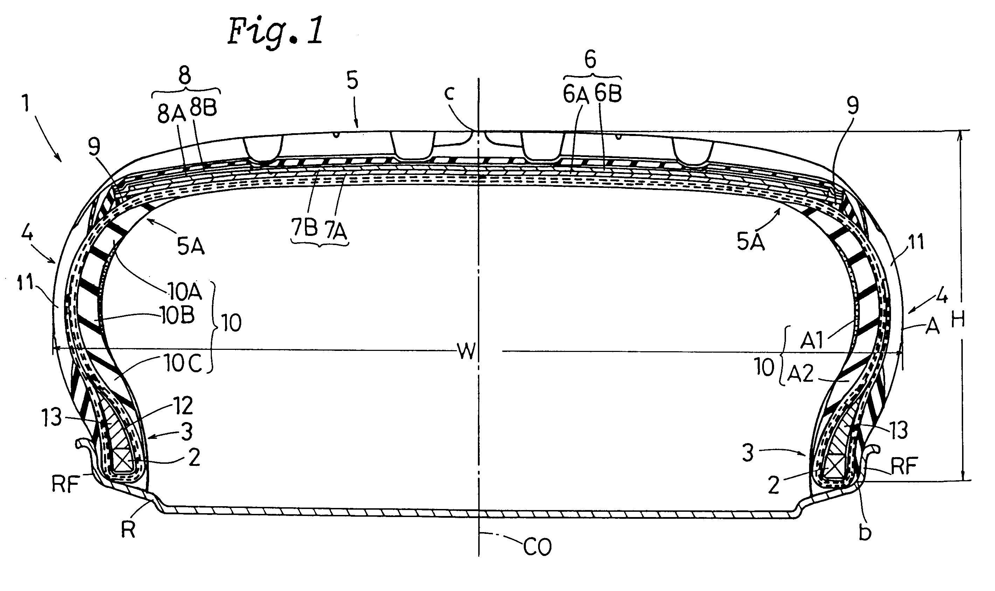

In Fig.1, a pneumatic safety tyre 1 of the present invention is designed for a high performance sport car, and the tyre size is 255/45ZR17. The tyre 1 is a run flat tyre to be mounted on an AH type rim (a humped rim) or a normal rim (no hump and no groove) as a regular rim R.

The tyre 1 comprises a tread portion 5, a pair of axially spaced bead portions 3, a pair of sidewalls extending between the tread edges and the bead portions 3, a pair of bead cores 2 each disposed in each of the bead portions 3, a toroidal carcass 6 extending between the bead portions 3, and a belt disposed radially outside the carcass 6 and inside a rubber tread.

The aspect ratio of the tyre 1, namely, the ratio H/W of the tyre section height H to the maximum tyre width W is less than 0.5 (50%), in this embodiment 0.45 (45%).

The carcass 6 comprises two plies 6A and 6B of cords extending between the bead portions 3 and turned up around the bead cores 2 from the axially inside to the outside thereof to form two turned up portions and a main portion.

The carcass cords in each of the carcass plies 6A and 6B are arranged radially at an angle of 60 to 90 degrees with respect to the tyre equator CO.

For the carcass cords, steel cords or organic fibre cords, e.g. rayon, polyester, nylon, aromatic polyamide or the like can be used.

In the sidewalls 4, the carcass 6 is convexly curved, and the inner surface thereof is also convexly curved both outwards from the tyre air chamber.

The belt in this embodiment comprises a breaker belt 7 and a band belt 8.

The breaker belt 7 comprises a radially inner wide ply 7A disposed on the radially outside of the carcass 6 and an radially outer narrow ply 7B disposed on the radially outside of the inner wide ply 7A, each extending across the entire width of the tread portion.

Each of the belt plies 7A and 7B is composed of parallel cords laid at a relatively small angle with respect to the tyre equator CO so as to cross each other.

For the breaker belt cords, steel cords or high elastic modulus organic cords, e.g. aromatic polyamide are used.

It is possible to use relatively low elastic modulus organic cords, e.g. nylon, polyester, rayon or the like together with the above-mentioned high modulus cords.

The band belt 8 comprises a radially inner ply 8A and a radially outer ply 8B.

The inner ply 8A comprises a pair of axially spaced parts disposed on the radially outside of the breaker belt 7.

Each part has an axially outer edge extending axially outwardly over one of the edges of the breaker belt 7, and an axially inner edge terminated at an axial distance, from the tyre equator CO, of about 1/4 of the tread width.

The outer ply 8B extends across the entire width of the tread portion so as to cover the radially outer side of the inner ply 8A and a central part of the radially outer side of the belt layer 7, and the edge thereof are substantially aligned with the axially outer edges of the inner ply 8A.

For the band belt cords, organic fibre cords, e.g. rayon, nylon, polyester or the like are used.

In each tyre shoulder portion, a breaker cushion 9 made of a soft rubber compound is disposed between the edge of the breaker belt 7 and the carcass 6.

In each of the sidewall portions 4, an inside sidewall rubber layer 10 is disposed on the inside of the carcass 6, and an outside sidewall rubber layer 11 is disposed on the outside of the carcass 6.

The outside sidewall rubber layer 11 has a JIS A hardness of 55 to 65.

The inside sidewall rubber layer 10 decreases in thickness towards its radially inner and outer edges from its central part, and accordingly the cross sectional shape thereof is generally a crescent shape.

The radially outer edge extends into the tread portion 5 axially inwardly beyond the belt edge and is terminated beneath the belt in the tread shoulder region 5A.

The radially inner edge extends into the bead portion 3 and is terminated axially inside the bead core 2 so as to increase the thickness of the bead portion and to thereby increase the bead rigidity.

Under deflated conditions, the tyre sidewall 4 is liable to be bent around the radially outer edge of its wheel rim flange RF, and accordingly a separation failure is liable to occur in such region. Therefore, the tyre thickness around the rim flange edge is increased to withstand such bending deformation.

In this embodiment, the inside sidewall rubber layer 10 has a double-layered structure composed of an axially outer layer A2 in direct contact with the inside of the carcass and an axially inner layer A1.

As shown in Fig.1, the axially outer layer A2 forms most of the inside sidewall rubber layer 10 and extends between the above-mentioned radially outer and inner edges the layer 10.

In comparison with the axially outer layer A2, the axially inner layer A1 is soft and very thin.

The axially inner layer A1 is disposed on the inner surface of the axially outer layer A2 so as to extend between a position substantially corresponding to the radially outer edge of the bead apex in the radial direction and a position substantially corresponding to the axially outer edge of the belt in the axial direction and thereby to cover only the central part of the inner surface.

The axially inner layer A1 has a JIS A hardness of 50 to 70 and a 100% modulus of 10 to 30 kgf/cm², and the thickness thereof is about 1 mm.

The axially outer layer A2 has a JIS A hardness of 70 to 90 and a 100% modulus of 30 to 70 kgf/cm². The axially outer layer A2 is harder than the outside sidewall rubber layer 11.

The inner layer A1 is disposed, in the region within which the compressive stress under run flat condition is greatest, in order to mitigate the compressive stress. The inner layer A1 prevents the inner surface from being cracked and durability is improved.

In the present invention, the total thickness of the tyre measured from the outer surface to the inner surface of the tyre is specifically defined.

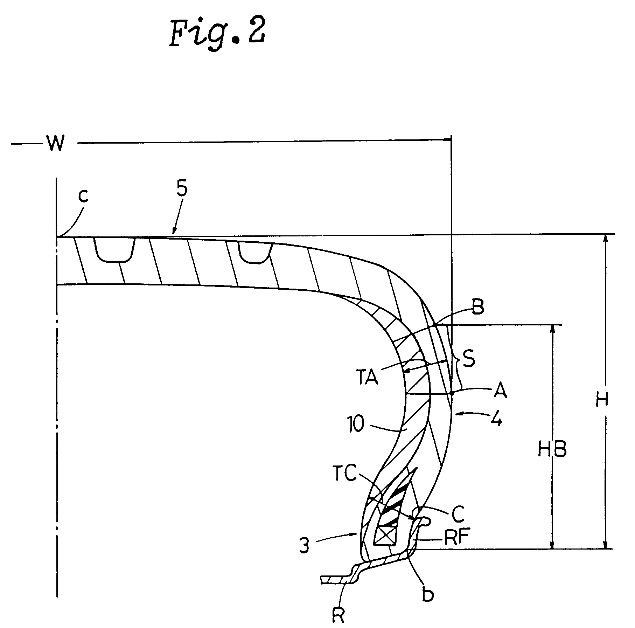

As shown in Fig.2, the total thickness TA of the sidewall portion 4 is substantially constant in a region S.

Here, the region S is defined as extending between a point (A) and a point (B) on the outer surface of the tyre, where the point (A) is the maximum width point at which the maximum width (W) of the tyre lies in the unloaded state, of the tyre, and the point (B) is the 65% height point located at a 65% height (HB) of the tyre section height (H), each measured from the bead base line (b) under the unloaded state, in which the tyre is mounted on its regular rim R and inflated to its regular inner pressure but not loaded with a tyre load.

The total thickness TC measured at a contact point C is larger than the total thickness TA in the region S.

Here, the contact point C is the point at which the outer surface of the tyre starts to contact the radially outer edge of the rim flange RF of its regular rim R under the unloaded state.

The total thickness TC at the contacting point C is in the range of 17 to 26 % of the tyre section height H. The total thickness TC is not less than 17 mm.

The total thickness TA in the region S is in the range of 15 to 22 % of the tyre section height H.

The total thickness TA is not less than 15 mm.

From the maximum width point (A) to the contact point (C), the total thickness gradually increases.

As a result the bending stress is dispersed and this minimises the bending deformation of the tyre sidewall, and so heat generation decreases and durability is improved.

If the thickness TC is less than 17% of the height H and the thickness TA is less than 15% of the height H, the run flat performance is lowered.

If the thickness TC is more than 26% of the height H and the thickness TA is more than 22% of the height H, the tyre weight increases and fuel consumption increases and further ride comfort is deteriorated.

In each bead portion 3, an organic cord reinforcing layer 12 is disposed between the bead core 2 and the carcass 6 to avoid direct contact of the carcass cords with the bead core and thereby to prevent the carcass cords from being chafed or damaged by the bead core.

Further, to increase the bead rigidity, each bead portion 3 is provided with a bead apex 13 made of a rubber compound having a Shore A hardness of 74 to 95, preferably 90 to 95.

The bead apex 13 is disposed between the carcass main portion and each turned up portion so as to be wrapped in the above-mentioned organic cord reinforcing layer 12, and the bead apex extends radially outwardly taperingly from the bead core 2 over the radially outer edge of the rim flange RF.

The bead portion 3 is provided with a tapered bead bottom with a single taper angle, and not provided with any special radially inwardly extending bead toe.

255/45ZR17 tyres having a tyre structure shown in Fig.1 and specifications given in Table 1 were made and tested as follows:

### A) Run flat test

The test tyre was mounted on an AH type rim, and the tyre/rim assemblies were fitted to the four wheels of a sports car with a 5000 cc engine.

In a punctured state simulated by decreasing the inner pressure of the tyre on one of the two driven wheels to zero, the test car was run on a test circuit course composed of straight courses and curved courses at a speed of 80 km/hr, and the running distance to tyre breakage was measured. The results are shown in Table 1. It was confirmed that the working example tyres were greatly improved in run flat performance in comparison with the reference tyres.

Further, the run flat performance of Working example tyre 1 was measured under different temperature conditions (the temperature of the road surface).

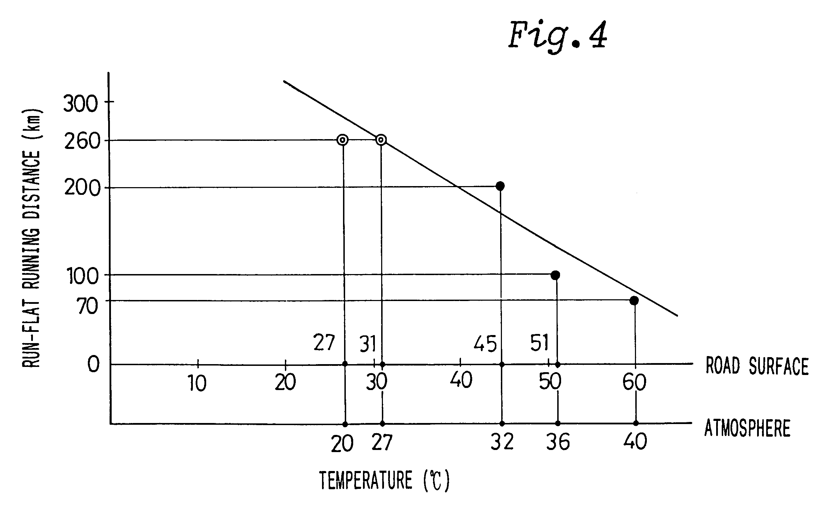

The results are plotted on the graph in Fig.4. In Fig.4, the atmospheric temperature is also indicated, and each double circle mark means that the tyre was not broken. It was also confirmed from the test that the working example tyre 1 could run for a long distance under a high temperature condition.

### B) High speed durability test

Using a drum, the running speed was increased every 20 minutes in steps of 10 km/h from an initial speed of 250 km/h, and the running time to breakage and the speed were measured.

The test conditions were as follows:

| | |
|---|---|
| Rim size | 10X17 |
| Pressure | 3.2 kgf/cm² |
| Tyre load | 463 kg |
| Camber angle | 1 degree |

It was confirmed that working example tyres 1 and 2 had a good high speed durability.

### C) Manoeuvrability test

The manoeuvrability under a normal tyre condition (not run flat condition) was evaluated by a test driver. The results are indicated in Table 1 by an index based on that Reference tyre 3 is 100. The larger the index, the better the result.

It was confirmed that working example tyres 1 and 2 had a good high-speed manoeuvrability as well as a good run flat performance.

**TABLE 1**

| | Ex.1 | Ex.2 | Ref.1 | Ref.2 |
|---|---|---|---|---|
| Sidewall rubber | | | | |
| Inside layer (A2) JIS A hardness | 75 | 75 | 75 | 75 |
| Outside layer (11) JIS A hardness | 59 | 59 | 59 | 59 |

| Bead apex rubber | | | | |
|---|---|---|---|---|
| JIS A hardness | 93 | 93 | 93 | 93 |
| TA/H (%) | 15 | 17 | 15 | 13.6 |
| TC/H (%) | 17 | 22 | 15 | 10 |
| Run flat running distance (km) *1 | 260 | 300 | 67 | 33 |
| High speed durability | 300km/h 5 min | 300km/h 5 min | 290km/h 6 min | 320km/h 6 min |
| Manoeuvrability | 100 | 105 | 100 | 95 |

| | | | | |
|---|---|---|---|---|
| *1) atmospheric temperature = 20 degrees C | | | | |

## Claims

1. A pneumatic tyre comprising a tread portion (5), a pair of axially spaced bead portions (3), a pair of sidewalls (4) extending between tread edges and the bead portions (3), a pair of bead cores (2) disposed one in each bead portion (3), a carcass (6) extending between the bead portions (3) through the tread portion and sidewalls (4), and a belt disposed radially outside the carcass (6) and extending across the tread width, whereby each said sidewall (4) is provided axially inside the carcass (6) with an inside sidewall rubber layer (10), the inside sidewall rubber layer (10) extending radially inwardly to the bead portion (3) and radially outwardly into the tread portion along the convexly curved inner surface of the carcass (6), characterised in that the total thickness of the tyre measured from the outer surface to the inner surface of the tyre being such that the total thickness (TA) is substantially constant in a region (S), defined as the region extending between a maximum width point (A) at which the width of the tyre is a maximum in the unloaded state, and a 65% height point (B) located at a 65% height (HB) of the tyre section height (H), each measured from the bead base line (b) in the unloaded state, the unloaded state being such that the tyre is mounted on its regular rim and inflated to its regular inner pressure but loaded with no tyre load, and that the total thickness (TC) measured at a contacting point C is larger than said total thickness (TA) in the region (S), the contacting point (C) being defined as the point at which the outer surface of the tyre starts to contact the radially outer edge of the flange (RF) of the regular rim in the unloaded state.

2. A tyre according to claim 1, characterised in that the total thickness (TC) at the contacting point (C) is in the range of 17 to 26 % of the tyre section height (H), and the total thickness (TA) in said region (S) is in the range of 15 to 22 % of the tyre section height (H).

3. A tyre according to claim 1 or 2, characterised in that the total thickness (TC) at the contacting point (C) is not less than 17 mm, and the total thickness (TA) in the region (S) is not less than 15 mm.

4. A tyre according to claim 1 2 or 3, characterised in that the inside sidewall rubber layer (10) comprises a rubber layer (A2) having a JIS A hardness of 70 to 90 and a 100% modulus of 30 to 70 kgf/cm², and extending from the bead portion into the tread portion.

5. A tyre according to claim 4, characterised in that the inside sidewall rubber layer (10) further comprises a thin soft rubber layer (A1) having a JIS A hardness of 50 to 70 and a 100% modulus of 10 to 30 kgf/cm² disposed on the axially inner surface of said rubber layer (A2) so as to cover central part of the inner surface.

## Patentansprüche

1. Ein Luftreifen mit einem Laufflächenabschnitt (5), einem Paar axial beabstandeter Wulstabschnitte (3), einem Paar Seitenwände (4), die sich zwischen Laufflächenkanten und den Wulstabschnitten (3) erstrecken, einem Paar Wulstkerne (2), von denen einer in jeweils einem Wulstabschnitt (3) angeordnet ist, einer Karkasse (6), die sich zwischen den Wulstabschnitten (3) durch den Laufflächenabschnitt und die Seitenwände (4) erstreckt, und einem Gürtel, der radial außerhalb der Karkasse (6) angeordnet ist und sich über die Laufflächenbreite erstreckt, wobei jede Seitenwand (4) axial innerhalb der Karkasse (6) mit einer inneren Seitenwandgummischicht (10) vorgesehen ist und die innere Seitenwandgummischicht (10) sich radial einwärts zum Wulstabschnitt (3) und radial auswärts in den Laufflächenabschnitt entlang der konvex gekrümmten inneren Oberfläche der Karkasse (6) erstreckt,
dadurch **gekennzeichnet**, daß
die Gesamtdicke des Reifens, gemessen von der äußeren Oberfläche zur inneren Oberfläche des Reifens, derart ist, daß die Gesamtdicke (TA) im wesentlichen konstant in einem Gebiet (S) ist, das als das Gebiet definiert ist, das sich zwischen einem Maximalbreitenpunkt (A), an dem die Breite des Reifens ein Maximum im unbelasteten Zustand ist, und einem 65%-Höhe-Punkt (B), der sich bei einer Höhe (HB) von 65% der Reifenschnitthöhe (H) befindet, erstreckt, jeweils gemessen von der Wulstbasislinie (b) im unbelasteten Zustand, wobei der unbelastete Zustand derart ist, daß der Reifen auf seiner regulären Felge befestigt und auf seinen regulären Innendruck aufgepumpt, aber mit keiner Reifenbelastung belastet ist, und daß die Gesamtdicke (TC), gemessen an einem Berührungspunkt (C), größer als die Gesamtdicke (TA) im Gebiet (S) ist, wobei der Berührungspunkt (C) als der Punkt definiert ist, bei dem die äußere Oberfläche des Reifens anfängt, die radial äußere Kante des Flansches (RF) der regulären Felge im unbelasteten Zustand zu berühren.

2. Ein Reifen nach Anspruch 1,
dadurch **gekennzeichnet**, daß die Gesamtdicke (TC) am Berührungspunkt (C) im Bereich von 17 bis 26% der Reifenschnitthöhe (H) und die Gesamtdicke (TA) im Gebiet (S) im Bereich von 15 bis 22% der Reifenschnitthöhe (H) liegt.

3. Ein Reifen nach Anspruch 1 oder 2,
dadurch **gekennzeichnet**, daß die Gesamtdicke (TC) am Berührungspunkt (C) nicht kleiner als 17 mm und die Gesamtdicke (TA) im Gebiet (S) nicht kleiner als 15 mm ist.

4. Ein Reifen nach Anspruch 1, 2 oder 3,
dadurch **gekennzeichnet**, daß die innere Seitenwandgummischicht (10) eine Gummischicht (A2) mit einer JIS A-Härte von 70 bis 90 und einem 100%-Modul von 30 bis 70 kgf/cm² umfaßt und sich vom Wulstabschnitt in den Laufflächenabschnitt hinein erstreckt.

5. Ein Reifen nach Anspruch 4,
dadurch **gekennzeichnet**, daß die innere Seitenwandgummischicht (10) weiter eine dünne weiche Gummischicht (A1) mit einer JIS A-Härte von 50 bis 70 und einem 100%-Modul von 10 bis 30 kgf/cm² umfaßt, die auf der axial inneren Oberfläche der Gummischicht (A2) angeordnet ist, um den zentralen Teil der inneren Oberfläche zu bedecken.

## Revendications

1. Pneumatique comprenant une partie de bande de roulement (5), une paire de parties de talon (3) qui sont axialement espacées, une paire de flancs (4) placés entre les bords de la bande de roulement et les parties de talon (3), une paire de tringles (2) placées chacune dans une partie de talon (3), une carcasse (6) placée entre les parties de talon (3), dans la partie de bande de roulement et les flancs (4), et une ceinture placée radialement à l'extérieur de la carcasse (6) et disposée sur toute la largeur de la bande de roulement, et chaque flanc (4) comporte axialement à l'intérieur de la carcasse (6) une couche interne (10) de caoutchouc de flanc, la couche interne (10) de caoutchouc de flanc étant disposée radialement vers l'intérieur de la partie de talon (3) et radialement vers l'extérieur dans la partie de bande de roulement le long de la surface interne à courbure convexe de la carcasse (6) caractérisé en ce que l'épaisseur totale du pneumatique, mesurée de la surface externe à la surface interne du pneumatique, est telle que l'épaisseur totale (TA) est pratiquement constante dans une région (S) définie comme étant la région comprise entre un point (A) de largeur maximale auquel la largeur du pneumatique est maximale à l'état sans charge, et un point (B) à 65 % de hauteur qui se trouve à une hauteur (HB) de 65 % de la hauteur (H) en coupe du pneumatique, chaque hauteur étant mesurée par rapport à l'axe (b) de base de talon à l'état sans charge, l'état sans charge étant tel que le pneumatique est monté sur sa jante normale et est gonflé à sa pression interne nominale, mais n'est soumis à aucune charge, et en ce que l'épaisseur totale (TC) mesurée en un point de contact (C) est supérieure à l'épaisseur totale (TA) dans la région (S), le point de contact (C) étant défini comme étant le point auquel la surface externe du pneumatique commence à être au contact du bord radialement externe du flasque (RF) de la jante normale à l'état sans charge.

2. Pneumatique selon la revendication 1, caractérisé en ce que l'épaisseur totale (TC) au point de contact (C) est comprise entre 17 et 26 % de la hauteur (H) en coupe du pneumatique, et l'épaisseur totale (TA) dans ladite région (S) est comprise entre 15 et 22 % de la hauteur (H) en coupe du pneumatique.

3. Pneumatique selon la revendication 1 ou 2, caractérisé en ce que l'épaisseur totale (TC) au point de contact (C) n'est pas inférieure à 17 mm, et l'épaisseur totale (TA) dans la région (S) n'est pas inférieure à 15 mm.

4. Pneumatique selon la revendication 1, 2 ou 3, caractérisé en ce que la couche interne (10) de caoutchouc de flanc comporte une couche de caoutchouc (A2) ayant une dureté JIS A comprise entre 70 et 90 et un module à 100 % compris entre 3.10⁶ et 7.10⁶ Pa (30 à 70 kg/cm²), et disposée de la partie de talon à l'intérieur de la partie de bande de roulement.

5. Pneumatique selon la revendication 4, caractérisé en ce que la couche interne (10) de caoutchouc de flanc comporte en outre une mince couche (A1) de caoutchouc tendre ayant une dureté JIS A comprise entre 50 et 70 et un module à 100 % compris entre 1.10⁶ et 3.10⁶ Pa (10 à 30 kg/cm²) placée à la surface axialement interne de la couche (A2) de caoutchouc afin qu'elle recouvre la partie centrale de la surface interne.
